# EUROPEAN PATENT SPECIFICATION

(11) **EP 2 683 759 B1**
(45) Date of publication and mention of the grant of the patent: **04.05.2016**
(21) Application number: 12755627.2
(22) Date of filing: 06.03.2012
(51) Int. Cl.: C08H 7/00, D21C 11/00, C07G 1/00

(54) **SEPARATION OF LIGNIN FROM PLANT MATERIAL**
TRENNUNG VON LIGNIN AUS EINEM PFLANZENMATERIAL
SÉPARATION DE LA LIGNINE D'UNE MATIÈRE VÉGÉTALE

(30) Priority: 09.03.2011 FI 20110087
(43) Date of publication of application: 15.01.2014
(73) Proprietor: Cerefi Ltd, 02160 Espoo (FI); Mälkki, Yrjö, 01260 Espoo (FI)
(72) Inventor: MÄLKKI, Yrjö, FI-01260 Espoo (FI); SIPILÄ, Jussi, FI-00600 Helsinki (FI)
(74) Representative: Berggren Oy Ab
(86) International application number: PCT/FI2012/000013
(87) International publication number: WO 2012/120184

(56) References cited:
- EP-A2- 0 098 490
- WO-A1-2007/065241
- CA-A1- 2 129 172
- US-A1- 2009 069 550
- Anna Maria Raspolli Galletti: "Biomass pre-treatment: separation of cellulose, hemicellulose and lignin. Existing technologies and perspectives. Utilization of Biomass for the Production of Chemicals or Fuels. The Concept of Biorefinery comes into Operation", Eurobioref, 19 September 2011 (2011-09-19), pages 1-69, XP055127222, Castro Marina Retrieved from the Internet: URL:http://www.eurobioref.org/Summer_Schoo l/Lectures_Slides/day2/Lectures/L04_AG Raspolli.pdf [retrieved on 2014-07-07]
- KIM T H ET AL: "Pretreatment and fractionation of corn stover by ammonia recycle percolation process", BIORESOURCE TECHNOLOGY, ELSEVIER BV, GB, vol. 96, no. 18, 1 December 2005 (2005-12-01), pages 2007-2013, XP027800613, ISSN: 0960-8524 [retrieved on 2005-12-01]

## Description

### Background of the invention

The purpose of the invention is to isolate lignin from plant materials or fractions of these in as native form as possible, and to provide methods for its purification or fractionation for industrial utilization to various purposes.

After cellulose, lignin is the most common ingredient of the biomass produced by plant kingdom. Its share of the dry material of grassy and woody plants is most often 20-32%. Quantitatively, the largest part of it is in the secondary cell walls, but the highest content is in the middle lamellae. Jointly with hemicellulose it binds cellulose fibres together creating a more stiff structure and adding especially the bending strength. It is obtained in large quantities as a by-product of industrial processes, especially in those processing woods. Its principal present use in industrialized countries is production of energy. In developing countries it still is led in effluent waters to water systems causing serious environmental problems. Besides energy use, other utilization of lignin is, for example, in the United States around 2% of the lignin containing by-products of industry.

Lignin is a group of substances where the more close composition depends on the plant species. Principal structural compounds of the macromolecules are phenylpropane units, which are bound to each other by carbon-carbon or carbon-oxygen bonds to a cross-linked and branched structure. As a mean molecular weight in native plant material, 20 000 g/mol for hardwood lignin has been presented. In softwood lignin it is regarded to be lower, and in other plant material about 10 000 g/mol. Monomeric components consist of *para*-hydroxyphenyl, guajacyl and syringyl type units, their mutual ratios varying depending on the plant species. A carbohydrate component is also attached to the molecule, and according to an often presented opinion it is bound to the molecule by a covalent bond. Central reactive components are phenolic hydroxyl groups and carbonyl groups, and the proportion of side chains is indicated by aliphatic hydroxyl groups. As an example for the basic structural component of softwood lignin, a structural formula of its one segment, presented by Adler (Wood Sci. Technol. 11, 169-218, 1997) is commonly accepted. It contains 16 phenylpropane units, is branched and also contains one heterocyclic ring, and has a molecular weight of 3024 g/mol. The content of phenolic hydroxyl groups is 1.65 mmol/g, aliphatic hydroxyl groups 6.9 mmol/g, and methoxyl groups 5 mmol/g. In lignin material obtained from straw using a low-temperature extraction with dioxane-water-hydrochloride solution, the content of aromatic hydroxyl groups has been 1.6 mmol/g, and of carboxyl groups 0.96 mmol/g (Kocheva L.S. et al., Russian Journal of Applied Chemistry, Vol. 78, No. 8, pp. 1343-1350, 2005). Composition of a lignin fraction, however, also depends on the yield obtained in the process, as compared to the content of lignin in the starting material. Thus, for example, in the study of Salanti et al. (J. Agric. Food Chem. 58, 10049-10055, 2010), where the alkali concentrations were 0.1-0.3 M, extraction temperature 70-90°C, and the alkali treatment was followed by two subsequent enzymatic hydrolyzing periods, the yield of the extracted lignin was 11.2-29.1% of the lignin in the starting material, its degree of purity was in the range 65.2-77.9%, and the content of phenolic hydroxyls in the range 0.22-0.75 mmol/g. By extracting with hydrochloride-dioxane-water solution these authors obtained a lignin yield of 46.3%, the degree of purity being 86.0%, and content of phenolic hydroxyls 1.53 mmol/g.

Lignin is separated from plant material in largest amounts in cellulose industries, where it is a by-product. Its utilization in energy production is a part of the recirculation of process chemicals. Due to its small oxygen content, its energy value is high, but due to the energy consumed at evaporation and drying stages, only a part of the calculated energy value can be recovered. In several developing countries, this possibility for utilization is not used in still existing small cellulose factories with no chemical recovery systems, and lignin and chlorinated lignin arising from the effect of bleaching chemicals cause considerable environmental and health problems.

Utilization of lignin for higher value added purposes than energy production has been a subject of intensive research for more than half a century. Present large scale uses are additives of cement, encapsulation of feeds, oil drilling adjuncts, flotation enrichment of minerals, industrial dispergents, preparation of adhesives and glues, and dust binding. The only small molecular ingredient manufactured from lignin in a considerable scale is vanillin. Possibilities for marketing it are however limited to spicing purposes. The structural components of lignin, especially aromatic parts of it, offer possibilities for preparing products of higher value added by separating these parts of the structure and by their further modification by chemical, physical or enzymatic means. Recently, research and development has been directed to possibilities to replace petrochemical ingredients and products by products made from lignin. Important objectives have been manufacture of carbon fibre, glues, high-temperature resistant binding resins, use as an ingredient in preparation of polymers and composites, various applications in the electronic industries, and fire retardants. Developments of the oil market and on the other hand separation techniques can also enable economic preparations of small molecular chemicals.

Essential factors for most of the further processings are the purity and reactivity of lignin available as a starting material. Under the conditions of the sulphate process which is presently most often used in cellulose manufacture, lignin present in the plant material undergoes several types of decomposition and condensation reactions. Consequently, in the crude product obtained and called Kraft lignin, the proportion of original native lignin structures is strongly reduced, and among others, also sulphur containing atom groups are added into the molecule or fragments produced. A part of the material is condensed to an insoluble macromolecular form, another part is decomposed to small molecules. A crude lignin obtained is often regarded to be a chemically inert material, however, it contains reactive atom groups and radicals which are regarded to be stable. Even small changes in conditions of storage or use can reveal radicals or reactive groups which can lead to changes which are noticeable, among others, in colour, consistency properties and solubility of the mixture. Due to breakage of side chains, the content of phenolic hydroxyls is higher in Kraft lignin than in native lignin. In non-fractioned black liquor it is 3.3-4.8 mmol/g depending of wood material and process used (Brodin et al., Holzforschung 63, 290-297, 2009). In other separation processes performed at high temperatures, reactions are partly the same. For these reasons, a precondition for exploiting the valuable constituents present in the mixture is to subject it to multi-stage purification processes, which makes many potential utilization efforts uneconomical. In black liquor obtained from Kraft process, the weight average molecular weight (M_{w}) is 1600 - 6500 g/mol, depending of the wood source and of the process. To obtain starting materials for further processing with a more narrow molecular weight distribution, fractionation by membrane filtration using ceramic filters has been suggested (Brodin et al., *locus citatus*).

Sulphur free or low-sulphur lignin is possible to produce as a by-product of the so-called soda method, as well from wood material as from other plant material such as straw and residual material of other plant production. This cellulose manufacture is common in some developing countries, but amounts of lignin separated from these processes and available on the market are small. Using an alkaline steam explosion method, extraction yield of 33.3% of the lignin present in birch chips has been obtained, and the content of lignin in the final product has been 82.4% (Sudo et al., J. Appl. Polymer Sci. 48, 1485-1491, 1993). To enable recovery of process chemicals also in processing straw materials which have a higher silica content than wood materials, efforts to reduce silica compounds dissolved in black liquor have been made. Removal of silica compounds is also important in attempts to prepare carbon fibre precursors. However, in processes where dissolved or precipitated silica compounds are not harmful, this stage of the process can be avoided. Conventional precipitation chemicals for silica compounds have been carbon dioxide or exhaust gas of burnings, or sulphuric acid, and pH range of the precipitation has been 9.5-11.0.

Separation of lignin from biomass by ammonia percolation method has been presented in Kim and Lee, Bioresource Technology 96 (2005), 2007-2013. The dissolving of lignin is achieved by pressurized treatment in ammoniacal solutions, preferably at temperatures of 170°C and above. The process is suggested to be used principally as a pretreatment to improve hydrolyzability of the carbohydrate fraction for further processing to unicellular protein. Efficiency of extractions, as indicated by enzymatic digestibility of the carbohydrate fraction, was insufficient at temperatures below 130°C. Lignin separated is suggested to be used as fuel.

In a biomass fractionation method as described by O'Kelly and Rivera in WO 2007/065241 A1 the procedure includes impregnating the biomass with 10 to 40% acid solution, followed by heating, for partial depolymerization of lignin. After heating, acid is removed by distillation, dissolving of lignin in alkaline solution is performed, and lignin is precipitated by acid from this solution. In a preferred embodiment it is subjected to catalytic oxidation by using nitric acid and/or ammonia in the impregnating solution and having a black iron reactor at the heating stage. This is followed by similar alkaline and precipitation treatments. Maximal temperature in the treatments is 90°C. Lignin is reported to be native, but is partly depolymerized and in the preferred embodiment oxidized.

Sulphur free or low-sulphur lignin has also been produced or suggested to be produced by methods where organic solvents are used. In the most well known of these, the Organosolv method, the solvent is ethanol, and the catalytic agent is sulphuric acid. Industrial use of this method ended in 1989 being uneconomical, but it has been started again in pilot scale. Carbohydrate content of the product given is below 1%. A yield of 35.8% from birch lignin has been published (Sudo and Shimizu, J. Appl. Polymer Sci 44, 127-134, 1992). The sulphur content of the products has been low. Depending on processing conditions, phenolic hydroxyl content of organosolv lignins has varied in the range 2.21-4.83 mmol/g, aliphatic hydroxyls in the range 2.73-5.14 mmol/g, methoxyl groups in the range 6.98-8.73 mmol/g, and molecular weight (M_{w}) in the range 1105-5500 (Pan X. et al., J. Agric. Food Chem. 54, 5806-5813, 2006, Belanger H. et al., US patent application 2009/0069550).

The most common quality criteria for evaluating possibilities for applications are solubility, molecular weight and its distribution, content of mechanical impurities, sulphur, carbohydrates, salts, ash and silica compounds, content of free phenolic hydroxyls, and colour of the product. Reactivity at polymerization and polycondensation reactions can be tested by following contents of reactive components, energy released at exothermic reactions, and changes in molecular weight distribution. Applicability to products resisting high temperatures or to their ingredients can be estimated by thermographic analyses at oxygen free or oxygen containing atmosphere. Applicability to carbon fibre precursors can further be estimated based on the content of aromatic compounds, and on melting, solubility and rheological properties.

For purifying lignin from hemicellulose which precipitates simultaneously with lignin, several publications suggest the use of hydrolysis of hemicellulose, but conditions for performing it nor degree of hydrolysis are seldom presented more closely. A hydrolysis performed at strongly acidic conditions leads to structural changes of lignin and breakage of side chains. Applying enzymatic hydrolysis is difficult, since hemicellulose consists of several carbohydrate monomers, and the specificity of each enzyme limits the bonds it can hydrolyze. For hydrolyzing hemicellulose existing in black liquor as completely as possible to oligosaccharide and monosaccharide stages, multi-specific enzyme mixtures have to be applied. Using them under their specified optimal conditions, the degree of hydrolysis remains easily too low and too difficult to control in real time.

Difficulties commonly acknowledged in the preparation of lignin are separation of finely dispersed precipitated lignin from the solution, and elevated levels of viscosity. Due to the small particle size, filters are clogged, use of hydrocyclones or other centrifugal methods is inefficient or uneconomical, sedimentation is nearly non-existing, and an efficient washing of the precipitate is difficult due to the strong water-binding ability of the precipitate. As means for filterability, United States patent 6 239 198 presents an acid precipitation at a low temperature, followed by a short thermal treatment, but reports a water content of a vacuum filtered precipitate of at least 50%, and gives no data on its lignin or carbohydrate contents.

Molecular weights of lignin and its fractions prepared and purified in industrial scale have in various studies been in the range <1000 - 20,000 g/mol. In a commercial preparation of Kraft lignin (Westvaco), contents of phenolic hydroxyls reported have been 4.3 mmol/g, aliphatic hydroxyls 4.1 mmol/g, methoxyl groups 5.8 mmol/g, and the weight average molecular weight (M_{w}) 2 400 (Kubo and Kadla, J. Polym. Environm. 13 (2), 2005). A typical sulphur content in Kraft lignin given is 1-2%. As typical contents in commercial lignosulphonates, 70-75% of lignin and 3 to 8% of sulphur are given (Holladay et al., Pacific Northwest National Laboratory, Report PNNL-16983, 2007). A commercial sample of Kraft lignin available for laboratory studies contained 85.1% of lignin, as analyzed in connection of the present study using a method based on liquid chromatography and mass spectrometry.

### Summary of the invention

The invention provides a method for separating lignin from an alkaline black liquor obtained from delignification of plant material or a fraction thereof. According to the invention the method comprises the steps of:
a) providing said black liquor by dissolving lignin contained in said plant material to a sulphur-free alkaline solution at temperatures not exceeding 130°C,
b) removing residues of cellulose and mechanical impurities from the solution by filtration,
c) precipitating lignin by addition of acid to the solution,
d) hydrolyzing simultaneously precipitating hemicellulose to oligomer and monomer stage, by an acid hydrolysis comprising decreasing the pH value of the solution to below 2.0, or enzymatically at one or several stages or by using a multifunctional enzyme mixture,
e) separating the precipitated lignin from the solution, and
f) washing the separated precipitate to obtain purified lignin as a final product having a lignin content of at least 80%.

In the development of this method, starting materials selected were cereal straw and hulls, but the principle can be applied also for treatment of other non-wood plant materials. As compared to woody materials, they provide a more advantageous possibility to prepare native or nearly native lignin in industrial scale. This is, among other factors, due to the thin layers of the starting material, which allow a more rapid penetration of chemicals and separation of the dissolved material. Another important factor is a lower degree of lignifications, which leads to better solubility of lignin. In further processing of separated lignin, advantage is expected due to the linearity of grass lignin, especially as compared to hardwood lignin. In the experimental studies now performed it has been found, that lignin present in these materials can to a great extent be dissolved in sulphur free alkaline solutions already by treatments at temperatures below 130°C. Thereby the native structure of lignin developed in the plant material remains for its greatest part unaltered. The starting material has been treated in 3 % weight/weight sodium hydroxide solutions at the boiling point at atmospheric pressure. As the first processing stage for treating the black liquor, residues of cellulose and mechanical impurities were removed by filtration. The method can also be applied to solutions of lignocellulosic materials obtained with other sulphur free alkaline black liquor solutions.

Lignin precipitates knowingly from acidic solutions, for a great part at the same pH range as hemicellulose. Exact conditions of precipitation have seldomly been presented, and they depend on the starting material and of the separation process of cellulose used, the process affecting changes in the polymeric mixture called lignin. Lignin fractions having different molecular weights can precipitate at different pH ranges and temperatures. Thus for Kraft lignin, which is extensively degraded, partly condensed and containing sulphur, precipitation is often performed at pH range 10 to 8. From the black liquor obtained from straw material in a low-temperature process, only a part of lignin was separated at the alkaline pH range, and the isoelectric point turned to be between 2.5 to 2.6. As mentioned above, a part of lignin starts to precipitate already at the pH range 9.0 to 10.0, and even after the precipitation at pH 2.5, a part of lignin remains in the solution.

In the study now performed, reasons for difficulties in separating lignin particles from solutions were presumed to be a protecting colloidal layer covering lignin particles, and electric charges of lignin particles. These difficulties have now been removed by improving the hydrolysis of hemicellulose. This can be performed either by an acid hydrolysis at pH below 2.0, advantageously at the range pH 1.0 -2.0, during at least 30 minutes, or enzymatically. The efficiency of an enzymatic hydrolysis could be elevated sufficiently by using multifunctional cellulose and hemicellulose decomposing enzymes at one or several stages. The hydrolysis was performed partly at the pH and temperature ranges specified for the enzyme preparations used, and completed outside these ranges at pH range 2.0 to 3.0, advantageously at pH range 2.2 to 2.8, or combining enzymatic hydrolysis with a mild acid hydrolysis. Surprisingly it was observed, that xylanase enzymes are able to hydrolyze hemicellulose outside the pH range recommended for the present commercial enzymes, and at temperature conditions which are at the external limit of their activity range. After the hydrolysis, the precipitate has been easy to separate by filtration or centrifugation, and water content of the precipitate has been at the highest 40%. Thus water soluble carbohydrates and salts could be removed without difficulties by repeated or displacing washings, and lignin content of the final product was at least 80%.

The yield of purified lignin, both when performed by using acidic or enzymatic hydrolysis, has been 60 to 80% of the amount present in the starting material and depending on the efficiency of recirculation of the washing liquids and of losses in the process. The composition of the lignin obtained has been close to the native lignin, having a mean molecular weight (M_{w}) from 2000 to 5400 g/mol, and containing phenolic hydroxyls at least 1.0 mmol/g. The products contain aliphatic hydroxyls at least 1.5 mmol/g, but at the highest 3.0 mmol/g, indicating a decrease in the content of side chains. At least 50% of the phenolic hydroxyls, depending on process conditions, can be non-condensed indicating their reactivity. In lignin prepared from straw material, the content of syringyl groups as compared to guajacyl groups is remarkably high. This elevates its reactivity. Based on these properties and on the high degree of purity which can be obtained with a good cost efficiency, these lignins are adaptable for various applications using methods known as such or to be developed.

The liquor remaining after separation of lignin contains hydrolyzed hemicellulose and salts. It can be utilized for preparation of pentose sugars, pentose sugar alcohols, feed boosting compounds, energy production, and for chemical recovery.

Implementing of the method is described in the following examples.

### Example 1.

Starting material used was black liquor obtained at preparing cellulose from oat straw by treating the straw in 3 % sodium hydroxide solution at 102°C. 40 litres of the black liquor was heated to 80°C, and 32% weight/weight sulphuric acid was added to the mixture with a dosing pump through a nozzle, simultaneously mixing efficiently, until a pH of 1.0 was reached. At the end stage, precipitated lignin particles started to aggregate and sediment to a slurry separable by decanting or filtering. The temperature of the mixture was now reduced to 40°C, lignin was separated by decanting and filtering, washed with water for removal of soluble carbohydrates, salts and residual acid. When using pressure filtration, water content of the precipitate separated was 30%. This enabled washing of the precipitate for removal of water soluble products of hydrolysis and salts rapidly, efficiently and using small amounts of water. The yield of dry lignin corresponded 15% of the mass of the air dry straw material used in the alkali extraction, and 74% of its lignin content. Lignin content of the end product, as determined by liquid chromatography and mass spectrometry, was in the range 95.7-99.6%, its weight average molecular weight (M_{w}) 3500 mol/g, content of phenolic hydroxyls 1.6 mmol/g, of aliphatic hydroxyls 1.7 mmol/g, of ash 1.9-2.6%, silica (as Si) content maximally 1%, but advantageously 0.5-0.9%, and sulphur content below the sensitivity limit of the analysis. Weight loss when heated in nitrogen atmosphere until 500°C was 50 %, and until 1000°C 68%.

### Example 2.

Black liquor obtained under conditions given in Example 1 was treated for removal of silica compounds, small sized cellulose particles and a part of lignin by reducing its pH to 9.6, and by filtering. pH of the solution obtained was adjusted to pH 5.5. To 300 ml of this solution, 2 ml of multifunctional xylanase preparation (Multifect Xylanase, Genencor, Finland) was added, and the mixture was subjected to hydrolysis at room temperature overnight. Hemicellulose was only partly hydrolyzed, and lignin precipitate formed had not been sedimented nor was possible to be separated by filtration. pH of the mixture was now reduced to 2.6, and the temperature was elevated to 65°C. Hydrolysis now continued rapidly, the precipitated flaky particles having initial diameter of 1 to 2 mm were reduced in size to a diameter below 1 mm and to a more solid consistency, and were agglomerated and sedimented on the bottom of the vessel. The precipitate was easy to separate by decantation and/or filtration. Its reduced water holding capacity enabled an efficient removal of soluble carbohydrates and salt by water washing. Its lignin content according to microscopic observations was 98%, its weight average molecular weight (M_{w}) 2860 g/mol, content of phenolic hydroxyls 1.2 mmol/g and aliphatic hydroxyls 2.0 mmol/g. Weight loss of dried product in heating at nitrogen atmosphere to 200°C was 6%, to 500°C it was 35%, and to 1000°C at the highest 75%, advantageously 71% from the starting weight. Sulphur content was, depending from the efficiency of washing, at the highest 0.25%, and silica (as Si) content at the highest 0.5%.

### Example 3.

1000 ml of black liquor pretreated at pH 9.6 as presented in Example 2 and subsequently stored for 3 months was adjusted with sulphuric acid to pH 5.0. 5 ml of xylanase enzyme preparation (Multifect Xylanase, Genencor, Finland). Temperature was elevated to 50°C, and hydrolysis was continued for one hour. Particles precipitated were flaky and in the beginning had diameters between 0.5 to 1.0 mm. During this time viscosity of the mixture decreased clearly, and at the end of the period the particles started to agglomerate intensively. pH of the mixture was now adjusted to 2.6, temperature was elevated to 63°C and was maintained at this temperature during 30 minutes. The flaky surface layer of the particles was dissolved, and diameter of the particles decreased to about 0.2 mm. Viscosity of the solution was further decreased to the level of plain water. The precipitate was separated by decantation and filtering, washed on the filter, and dried at room temperature.

### Example 4.

100 g of air dry oat straw was chopped to pieces of 3 to 5 cm, and added to 1000 ml of 3% weight/weight sodium hydroxide solution. The mixture was heated at its boiling temperature, occasionally stirring, during 2 hours. Cellulose fraction was separated by pressure filtration. 200 ml of the black liquor obtained corresponding to 20.6 g of dry straw material was taken for further treatment. pH of the mixture was adjusted to 5.0 by addition of sulphuric acid, 1 ml of xylanase preparation (Multifect Xylanase, Genencor) was added, and the temperature was elevated to 50°C. Hydrolysis was continued for one hour, after which pH was adjusted to 3.0, and 1 ml of xylanase added. Temperature of this now turbid and viscose mixture was elevated gradually to 63°C, and the hydrolysis continued, total time of this stage being 30 minutes. During this time, the viscosity was reduced nearly to the level of plain water. The precipitate formed was separated by decanting and filtering, and washed by repeated displacement operations. A light brown precipitate was obtained containing 2.84 g lignin, corresponding to 61.3% of the lignin in the starting material. The weight average molecular weight (M_{w}) was 5 400 g/mol, content of condensed phenolic hydroxyls 0.4 mmol/g, of non-condensed phenolic hydroxyls 0.8 mmol/g, of aliphatic hydroxyls 2.7 mmol/g, and of carboxyls 0.85 mmol/g.

## Claims

1. Method for separating lignin from an alkaline black liquor obtained from delignification of plant material or a fraction thereof, **characterized in that** the method comprises the steps of:
a) providing said black liquor by dissolving lignin contained in said plant material to a sulphur-free alkaline solution at temperatures not exceeding 130°C,
b) removing residues of cellulose and mechanical impurities from the solution by filtration,
c) precipitating lignin by addition of acid to the solution,
d) hydrolyzing simultaneously precipitating hemicellulose to oligomer and monomer stage, by an acid hydrolysis comprising decreasing the pH value of the solution to below 2.0, or enzymatically at one or several stages or by using a multifunctional enzyme mixture,
e) separating the precipitated lignin from the solution, and
f) washing the separated precipitate to obtain purified lignin as a final product having a lignin content of at least 80%.

2. Method according to claim 1, **characterized in that** starting material used is alkaline solution obtained from non-woody plants.

3. Method according to claim 1 or 2, **characterized in that** the yield of lignin from the lignin content of the original plant material is at least 60%.

4. Method according to any of the preceding claims, **characterized in that** said enzymatic hydrolysis or a part of it is performed at the pH range 2.0 to 3.0.

5. Method according to any of the preceding claims, **characterized in that** water content of the precipitate separated after hydrolysis is at the highest 40 %.

6. Method according to any of the preceding claims, **characterized in that** the weight average molecular weight of lignin is at least 2000 g/mol.

7. Method according to any of the preceding claims, **characterized in that** the silica (as Si) content of lignin is at the highest 1 %.

## Patentansprüche

1. Verfahren zum Trennen von Lignin von einer alkalischen Schwarzlauge, die aus der Delignifizierung eines Pflanzenmaterials oder einer Fraktion davon erhalten wird, **dadurch gekennzeichnet, dass** das Verfahren die folgenden Schritte umfasst:
a) Bereitstellen der Schwarzlauge durch Auflösen von Lignin, das in dem Pflanzenmaterial enthalten ist, auf eine schwefelfreie alkalische Lösung bei Temperaturen von nicht mehr als 130 °C,
b) Entfernen von Resten von Cellulose und mechanischen Verunreinigungen aus der Lösung durch Filtration,
c) Ausfällen von Lignin durch Zugabe einer Säure zu der Lösung,
d) Hydrolysieren von gleichzeitig ausfällender Hemicellulose auf die Oligomer- und Monomerstufe durch eine Säurehydrolyse, umfassend das Senken des pH-Wertes der Lösung unter 2,0, oder enzymatisch bei einer oder mehreren Stufen oder durch die Verwendung einer multifunktionellen Enzymmischung,
e) Trennen des ausgefällten Lignins aus der Lösung und
f) Waschen der getrennten Ausfällung, um gereinigtes Lignin als ein Endprodukt zu erhalten, das einen Ligningehalt von mindestens 80 % aufweist.

2. Verfahren nach Anspruch 1, **dadurch gekennzeichnet, dass** das verwendet Ausgangsmaterial eine alkalische Lösung ist, die aus nicht holzigen Pflanzen erhalten wird.

3. Verfahren nach Anspruch 1 oder 2, **dadurch gekennzeichnet, dass** die Ligninausbeute aus dem Ligningehalt des ursprünglichen Pflanzenmaterials mindestens 60 % beträgt.

4. Verfahren nach einem der vorhergehenden Ansprüche, **dadurch gekennzeichnet, dass** die enzymatische Hydrolyse oder ein Teil davon bei einem pH-Wert im Bereich von 2,0 bis 3,0 ausgeführt wird.

5. Verfahren nach einem der vorhergehenden Ansprüche, **dadurch gekennzeichnet, dass** der Wassergehalt der Ausfällung, die nach der Hydrolyse getrennt wird, höchstens 40 % beträgt.

6. Verfahren nach einem der vorhergehenden Ansprüche, **dadurch gekennzeichnet, dass** das durchschnittliche Molekulargewicht von Lignin mindestens 2000 g/Mol beträgt.

7. Verfahren nach einem der vorhergehenden Ansprüche, **dadurch gekennzeichnet, dass** der Siliciumdioxid-(wie Si-)-Gehalt von Lignin höchstens 1 % beträgt.

## Revendications

1. Procédé de séparation de la lignine d'une liqueur noire alcaline obtenue par délignification d'une matière végétale ou d'une fraction de celle-ci, **caractérisé en ce que** le procédé comprend les étapes consistant à :
a) fournir ladite liqueur noire en dissolvant la lignine contenue dans ladite matière végétale dans une solution alcaline exempte de soufre à des températures n'excédant pas 130 °C,
b) éliminer les résidus de cellulose et les impuretés mécaniques de la solution par filtration,
c) précipiter la lignine en ajoutant de l'acide à la solution,
d) hydrolyser simultanément l'hémicellulose précipitante au niveau oligomère et monomère, par une hydrolyse acide comprenant l'abaissement de la valeur pH de la solution à moins de 2,0, ou par voie enzymatique à un ou plusieurs niveaux ou en utilisant un mélange enzymatique multifonctionnel,
e) séparer la lignine précipitée de la solution, et
f) laver le précipité séparé pour obtenir de la lignine purifiée sous forme de produit fini ayant une teneur en lignine d'au moins 80 %.

2. Procédé selon la revendication 1, **caractérisé en ce que** la matière première utilisée est la solution alcaline obtenue à partir de végétaux non ligneux.

3. Procédé selon la revendication 1 ou 2, **caractérisé en ce que** le rendement de lignine à partir de la teneur en lignine de la matière végétale d'origine est d'au moins 60 %.

4. Procédé selon l'une quelconque des revendications précédentes, **caractérisé en ce que** ladite hydrolyse enzymatique ou une partie de celle-ci est effectuée dans la gamme de H de 2,0 à 3,0.

5. Procédé selon l'une quelconque des revendications précédentes, **caractérisé en ce que** la teneur en eau du précipité séparé après hydrolyse est au maximum de 40 %.

6. Procédé selon l'une quelconque des revendications précédentes, **caractérisé en ce que** la masse moléculaire moyenne en poids de lignine est d'au moins 2 000 g/mol.

7. Procédé selon l'une quelconque des revendications précédentes, **caractérisé en ce que** la teneur en silice (sous forme Si) de la lignine est au maximum de 1 %.
